# EUROPEAN PATENT APPLICATION

(11) **EP 4 275 924 A1**
(43) Date of publication of application: **15.11.2023**
(21) Application number: 23172911.2
(22) Date of filing: 11.05.2023
(51) Int. Cl.: B60C 25/05, B60C 25/138

(54) **TOOL GROUP FOR THE TREATMENT OF TYRED WHEELS AND CORRESPONDING METHOD**

(30) Priority: 11.05.2022 IT 202200009740
(71) Applicant: Sicam S.r.l., 42015 Correggio (RE) (IT)
(72) Inventor: GONZAGA, Tullio, 42015 Correggio (Reggio Emilia) (IT); CARAMAZZA, Salvatore, 42015 Correggio (Reggio Emilia) (IT); BENEDETTINI, Immacolata, 42015 Correggio (Reggio Emilia) (IT); MORSELLI, Davide, 42015 Correggio (Reggio Emilia) (IT)
(74) Representative: Feltrinelli, Secondo Andrea

(57) **Abstract**

The present invention relates to a group for the treatment, such as bead breaking and/or assembling and/or disassembling of tired wheels.

## Description

### TECHNICAL FIELD OF THE INVENTION

The present invention relates to a group for the treatment, such as bead breaking and/or assembling and/or disassembling of tired wheels for vehicles, as well as a related tire assembling-disassembling machine.

### STATE OF THE PRIOR ART

Normally, high-end tire assembling-disassembling machine are equipped with sensors that recognize the size of the wheel to be treated.

These sensors are basically laser triangulators which recognize the diameter of the rim, its width and its position in space.

These measurements are transferred to encoders associated with the tool support arms and in some cases with the wheel which radially approaches the tools.

This configuration is very onerous and requires complex software for the general management of the coordinate detectors which translate according to two axes and must be returned, once the measurement has been carried out, to their rest position outside the working range.

Moreover, the need to scan the wheel before starting the work cycle leads to a lengthening of the time necessary for the operation of disassembling-assembling the tire on the wheel rim.

### OBJECTS OF THE INVENTION

An object of the present invention is to provide a new treatment group, such as bead breaking, assembly and/or disassembly of tired wheels.

Another object of the present invention is to provide a group capable of detecting the required dimensions of a wheel simply and quickly during the work step so as to reduce the work cycles.

Another object of the present invention is to provide a new tire assembling-disassembling machine.

According to one aspect of the invention, a group according to claim 1 is provided.

The dependent claims refer to preferred and advantageous embodiments of the invention.

### BRIEF DESCRIPTION OF THE DRAWINGS

Other characteristics and advantages of the invention will be more evident from the description of an embodiment of a group, illustrated by way of example in the attached drawings in which:

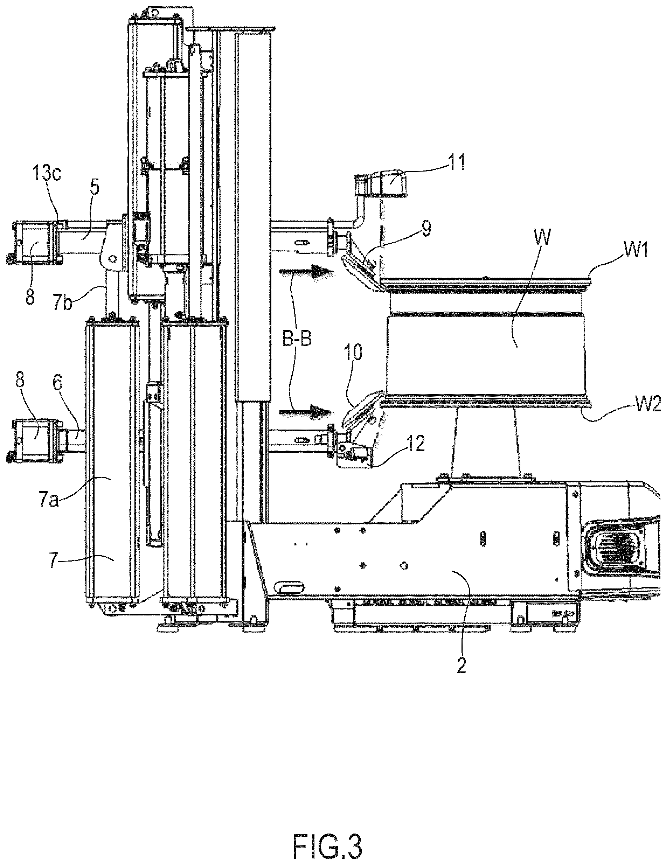

- figures 1 to 3 are side views of a group and a machine according to the present invention during respective work steps,
- figure 4 is a view of a detail on an enlarged scale of figure 3,

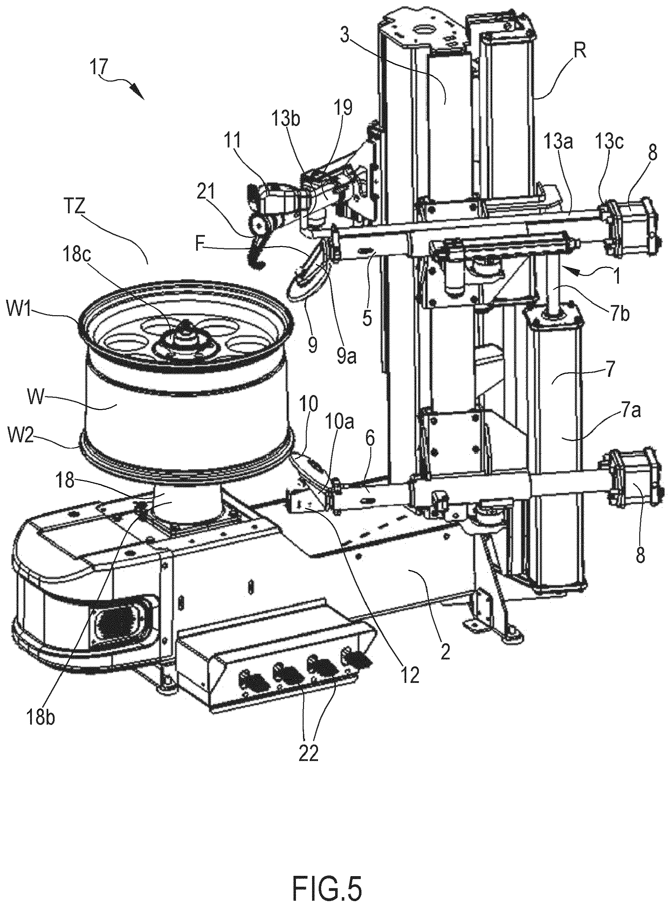

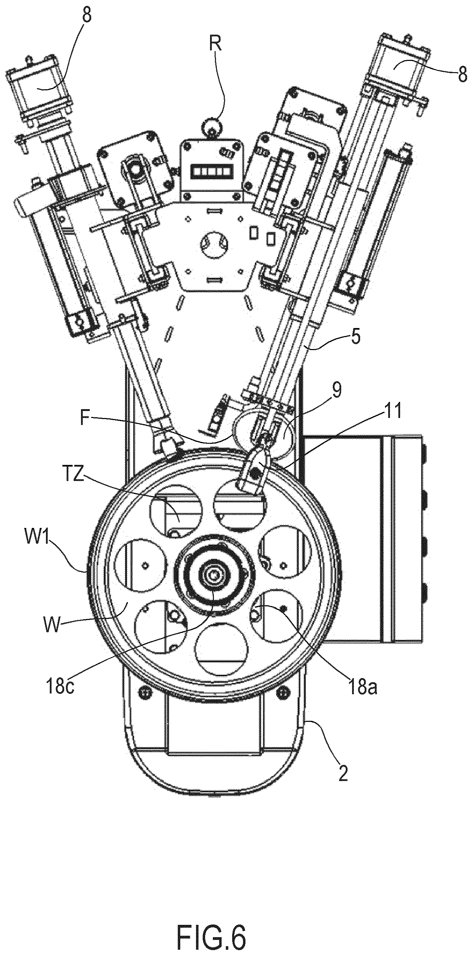

- figures 5 and 6 are perspective and top views, respectively, of the group and of the machine of figure 1,
- figure 7 is a block diagram representative of a process according to the present invention.

In the accompanying drawings, identical parts or components are identified by the same reference numbers.

### EMBODIMENTS OF THE INVENTION

With reference to the enclosed figures, a group for the treatment, such as bead breaking and/or assembling and/or disassembling of tired wheels of vehicles (cars, motorcycles, trucks, etcetera) is shown, which group comprises a base 2, at least one column or upright 3 rising from the base 2, at least one working arm 5, 6 supported or extending from the column or upright 3.

The column 3 and the arms 5, 6 can have any suitable configuration, for example tubular or not.

The group then includes actuation means 7, 8, such as hydraulic, pneumatic, electric or other actuators, arranged to determine the displacement of the working arm 5, 6 along said column or upright 3 and/or with respect to the column or upright 3.

At least one treatment tool 9, 10 of tired wheels is also provided, which is mounted, fixed or articulated or hinged, on one end or a portion of the at least one working arm 5, 6.

The tool 9, 10 can be a bead breaking roller, for example with a frusto-conical configuration, if desired mounted with idle or motorized rotation around a axis substantially transversal or inclined by about 30°-60°, preferably about 45° with respect to the extension or main longitudinal axis of the respective arm 5, 6. If desired, the bead breaking roller 9, 10 is rotatably mounted on a respective appendix 9a, 10a rising from and fixed, if desired removably, to the tool holder arm 5, 6.

Of course, the tool integral in movement with a sensor 11, 12 could alternatively or in addition be an assembly and/or disassembly tool, and thus not necessarily a bead breaking tool.

The group is also provided with at least one electronic control unit CPU arranged to drive the actuation means 7, 8 of the at least one working arm 5 and thus of the at least one treatment tool 9, 10 for carrying out the treatment of a tired wheel.

The machine 1 further includes at least one sensor 11, 12 arranged to detect at least one geometric characteristic, such as the diameter of a respective reference of a wheel rim W (mounted on support and constraint means of the group or of a tire assembling-disassembling machine), such as a circumferential edge of a wheel rim W and/or the distance between the sensor 11, 12 and a respective circumferential edge of a wheel rim W (mounted on support and constraint means of the group or of a tire assembling-disassembling machine) as well as to communicate such parameters or data or information to the control unit CPU, so that the control unit (CPU) drives or is arranged to drive the actuation means 7, 8 as a function of the parameters or data or information detected by the sensor 11, 12.

With reference in particular to the geometric characteristic or diameter of the wheel rim, the same could also be set by the operator or detected or set in another way (for example with a sensor not integral with an arm), while the distance of the arm from the wheel rim is detected by a sensor 11, 12 integral with the or with each arm 5, 6. Therefore, in this case, the sensor 11, 12 would not be able to detect the geometric characteristic/diameter or in any case it would not detect this characteristic.

In the present description it has been indicated and will indicate that the at least one sensor is intended to detect the diameter and/or the distance, but it is also understood that the sensor could detect data or information correlated or correlatable by the electronic control unit CPU to the above-indicated diameter and/or distance.

The expression "data or information correlated or correlatable" by the electronic control unit to the diameter and/or distance of a wheel rim, means data or information from which the unit CPU can derive or obtain the diameter value and/or distance.

As regards in particular the distance detected by the sensor 11, the same can be evaluated along an axis parallel to the axis of rotation x-x of the wheel rim or of the respective wheel, which in use can correspond to the axis of rotation of respective support and constraint means 18.

Alternatively, the distance can also be determined with reference to different directions, for example also inclined by any suitable angle with respect to the axis. Clearly, this distance is not evaluated or is not evaluated only along an axis lying in a plane orthogonal to the rotation axis of the wheel rim or of the respective wheel.

Such sensor 11, 12 is mounted on at least one working arm 5, 6, so that both the at least one treatment tool 9, 10 and the at least one sensor 11, 12 are supported by or mounted on the same working arm 5, 6 and moved in unison together with the latter on control of the control unit CPU.

Clearly, a single sensor 11 or 12 can be provided, mounted or supported by an arm which carries out both of the measurements above indicated (measurement of a geometric characteristic, such as for example the diameter of a respective circumferential edge of a wheel rim W and of the distance between the sensor 11, 12 and a respective circumferential edge W1 of a wheel rim W) or two sensors 11 or 12 both associated (mounted or supported) by the same arm and designed to detect the variables/parameters indicated above.

With regard to this aspect, if, as will be explained hereinafter, sensors associated with the two arms of the two bead breaker rollers are provided, then advantageously only one of these arms carries a sensor 11 such as to detect the diameter of the wheel rim, it clearly not being necessary both sensors associated with both arms provide this measurement.

Group 1 preferably comprises a working front F facing the treatment zone TZ of the group 1 and a rear R facing away from the treatment zone TZ. Clearly, the front F is the zone where the wheel for the treatment is placed and can also be identified by way of example with the axis of rotation of the wheel during the treatment or of respective support and constraint means which will be discussed later.

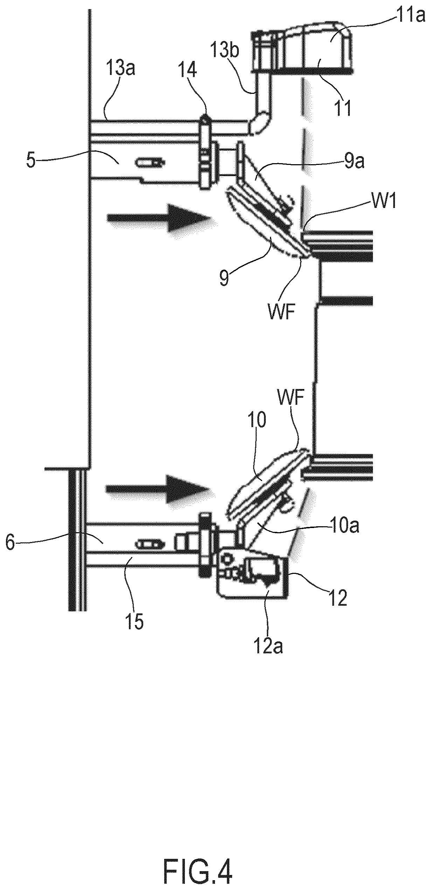

With reference to such an aspect, the sensor 11 protrudes (see in particular figure 4) with respect to the at least one treatment tool 9 in the direction of the front F or in a direction of approaching to the axis x-x of the wheel or wheel rim to be treated or in any case is in a position from the rear R more distal with respect to the at least one treatment tool 9 or the detection zone or band of detection of the sensor 12 extends beyond the respective tool 10, i.e. it is more distal from the rear R than the relative tool 10.

Advantageously, the sensor 11, 12 is arranged in such a way that the respective detection zone faces a band which is at a distance from the column or upright 3 greater than the treatment tool mounted on the same arm 5, 6 of this sensor 11.

Even more advantageously, the sensor 11 is at a distance from the column or upright 3 greater than the treatment tool mounted on the same arm 5, 6 of this sensor 11.

Moreover, the sensor 11, 12 is in a position such as not to hinder the action of the respective tool 9, 10.

This expedient is advantageous since it ensures that the sensor 11, 12 is capable of detecting or allowing the CPU to detect (depending on the parameters, data or information received from the sensor 11, 12) the diameter of the wheel rim W before the respective tool 9, 10 (that is to say the one mounted or supported by the same arm) or the working front of the same reaches the wheel to be treated or better before it reaches (following the action of the actuation means 8) the circumferential zone of the tired wheel in contact between the respective tire and wheel rim or towards the circumferential edge of the wheel rim and substantially aligned (in the direction parallel A-A to the axis x-x) with this zone or edge.

Of course, this could also not be the case, in which case the tool 9, 10 could also be moved backwards after detection by the sensor 11, 12.

Thus, for example, the sensor 11, 12 could also be in a position more distant than the tool 9, 10 with respect to the axis of rotation of the wheel or even at the same distance as the tool from this axis, see in particular the tool 10 and sensor 12.

In accordance with the embodiment illustrated in the figures, the sensor 11, 12 is mounted so as to have its detection zone facing upwards or downwards, depending on the arm 5, 6 with which they are associated or better of the tool 9, 10 with which they are integral in movements by means of the same arm 5, 6.

The sensor 11, 12 is of the non-contact (touchless) or electronic type, i.e. during operation of the group or of the respective machine and during the respective detection steps, it does not physically come into contact with the wheel rim or parts of the wheel to measure.

The sensor(s) 11, 12 can be of any suitable type, for example ultrasound or laser, in particular a laser triangulator and/or a sonar or of another type.

Clearly, the sensor has a signal emitting part and a signal receiving part. Advantageously, the sensor 11, 12 is designed to continuously measure its distance from a wheel rim or from a respective reference or circumferential edge W1 or data or information correlated or correlatable by the electronic control unit at this distance, and being responsible for continuously transmitting this distance or data or information detected, while the electronic central unit is responsible for processing the distance or data or information received continuously, so as to suitably drive the tool 9, 10 throughout the respective work step.

As regards the transmission of the parameters or data or information detected, a transmission component integrated or associated with the sensor 11, 12 could be provided.

Moreover, the sensor 11, 12 could also comprise a component or section for pre-processing the parameters or data or information detected.

The communication between the at least one sensor 11, 12 and the CPU control unit can take place in any suitable way, for example by cable or by means of a suitable wireless communication system, Wi-Fi, Bluetooth or other.

Advantageously, the arm 5, 6 is mounted vertically movable on or with respect to the at least one column or pillar 3, while the actuation means are designed to command, suitably driven by the control unit CPU, the lifting or lowering of the arm 5, 6 during a related wheel treatment process.

Clearly, this is relevant in the case in which the wheel is placed with the axis of rotation vertical during the treatment, but it does not apply in the case in which the wheel is treated with the axis of rotation inclined with respect to the vertical or (less probable case) horizontal.

According to the embodiment illustrated in the figures, the actuation means of one or each tool 9, 10 comprise a first actuator 7, if desired with trim or operating in the vertical direction, comprising for example a cylinder 7a as well as a stem 7b slidably mounted within the respective cylinder 7a in the vertical direction. Moreover, the cylinder 7a of an actuator 7 can be fixed or pivoted to the base 2 or to another component of the group, while the stem 7b of the actuator can be fixed or pivoted to a portion of the arm 5, 6 or vice versa.

If desired, the arm 5, 6 is telescopic or entirely or partially movable horizontally in the direction from the rear R to the front F so as to cause a forward or backward movement in this direction of the at least one tool 9, 10 and of the at least one sensor 11, 12. In this case, the actuation means 7, 8 are designed to control, suitably driven by the control unit CPU, the extension or movement in the rear R-front F direction of the arm 5, 6 during a relative procedure of wheel treatment.

In accordance with this variant, the arm 5, 6 is moved by means of the actuation means 8 in a plane orthogonal to the axis of rotation x-x of a wheel rim W to be treated, mounted on suitable support and constraint means, and in the direction B-B substantially incident on this axis x-x, so that it is possible to bring, among other things, the tool 9, 10 with the front or working end facing towards the circumferential zone of the tired wheel in contact between the respective tire and wheel rim or towards the circumferential edge of the wheel rim and substantially aligned (parallel to the axis x-x) with that zone or edge.

According to the embodiment illustrated in the figures, the actuation means of one or each tool 9, 10 comprise a second actuator 8, if desired with horizontal trim or operating in the horizontal direction, comprising a cylinder for example mounted behind (with reference to the rear-front direction) to a respective arm (or in another suitable position) and designed to control, upon command of the control unit CU, the advancement or backward movement towards the treatment zone TZ of the arm 5, 6 or of a part thereof bearing the respective tools 9, 10 and sensor 11, 12.

Alternatively, at least one arm 5, 6 is pivoted to the column or upright 3 and can be moved angularly around the respective pivot pin. This pivoting would however allow the arm 5, 6 to approach the axis of rotation x-x of a wheel rim W, so as to carry, among other things, the tool 9, 10 with the front or working end facing the circumferential zone of the tired wheel of contact between the respective tire and the wheel rim or towards the circumferential edge of the wheel rim and substantially aligned (in a direction parallel to the axis x-x) with this zone or edge.

In accordance with the non-limiting embodiment illustrated in the figures, the group 1 comprises at least two work arms 5, 6 as well as at least two treatment tools 9, 10, such as two bead breaker rollers and, if desired, at least two sensors 11, 12, each of the at least two arms 5, 6 supporting a treatment tool 9, 10 and, if desired, at least one sensor 11, 12. According to a less preferred variant, only one sensor 11 or 12 is provided.

As indicated above, if sensors associated with the two arms of the two bead breaker rollers are provided, then advantageously only one of these arms will carry a sensor 11 such as to detect the diameter of the wheel rim, since it would not be necessary that both sensors 11, 12 associated with both arms provide this measurement. In this case, the sensor 11 or another sensor mounted on the same arm will detect the distance with respect to the wheel rim edge and the same will be true for the sensor 12 mounted on the other arm.

Therefore, in this case, two bead breaker rollers would be provided, an upper one 9 designed to act from top to bottom so as to release or treat a first circumferential bead, in use, upper of a tire, which upper roller 9 would be supported or mounted on an upper arm 5, and a lower roller 10 designed to act from the bottom upwards so as to release or treat a second circumferential bead, in use, lower of a tire, which lower roller 10 is supported or mounted on a lower arm 6.

If a group according to the present invention comprises a first bead breaker roller 9 and a second bead breaker roller 10, then, preferably, they have a working front WF, i.e. the portion which, in use and, if the roller is rotatable, from time to time and during the rotation of the roller, comes into contact with a portion of the bead of the tire, one opposite to the other, so that the first bead breaker roller 10 is set to release a first bead, higher if desired, of a tire and the second bead breaker roller 10 is designed to release the other or second bead, lower if desired, of a tire.

In this case, the sensors 11, 12 will be in a position such as not to hinder the action of the respective tool 9, 10, so that one 11 could preferably be in a position above the respective tool 9 and the other 12 in a position below the respective tool 10.

With reference to the non-limiting embodiment illustrated in the figures, a first sensor 11 is supported by a rod 13 or the like which is connected or fixed to the upper arm 5, if desired by one or more respective brackets 14.

Preferably, the rod 13 is connected or fixed above the upper arm 5.

The rod 13 could have, in the direction from the rear R to the front F, for example a main section 13a that is rectilinear and parallel to the main extension axis of the respective arm 5 and then a second section 13b transverse or orthogonal to the main section 13a, the at least one sensor 11 or better a respective casing or containment component 11a of one or more sensors 11 is mounted on such second section 13b. If desired, the second section 13b extends upwards or in any case away from the arm 5 starting from the main section 13a.

If desired, a rear end or an end on the rear of the main section 13a is constrained or connected or fitted in a plate 13c mounted or integral with a rear portion of the arm 5, while a bracket 13d is provided such as to surround or constrain an intermediate portion of the rod 13 to the arm 5, for example at a front or front end of the main section 13a.

The casing or containment component 11a of the sensor 11, can for example have a half-shell configuration defining an opening facing (at least in part) downwards and which may or may not be closed, for example by means of a glass or a layer of transparent or translucent material or in any case such as not to prevent the passage of the light emitted and received by the at least one sensor 11.

Of course, the sensor 11 could also be fixed or constrained directly on the arm 5.

Again with reference to the non-limiting embodiment illustrated in the figures, a second sensor 12 is supported by means of a rod 15 or the like which is connected or fixed to the lower arm 5, if desired by means of one or more respective brackets 16. Preferably, the rod 15 is connected or fixed under the lower arm 6.

The rod 15 could have a straight main extension, if desired also with an end section facing downwards, and could support the sensor 12 or better a respective casing or containment component 12a.

The casing or containment component 12a of the sensor 12, can for example have a half-shell configuration defining an opening facing upwards and towards the front and which may or may not be closed by means of a glass or a layer of transparent or translucent material or in any case such as not to prevent the passage of the light emitted and received by the sensor 12.

Of course, the sensor 12 could also be fixed or constrained directly on the arm 6.

Subject-matter of the present invention is also a machine 17 comprising at least one group 1 as well as means 18 for supporting and constraining a wheel rim W of or for a tired wheel designed to support a wheel rim or a tired wheel with a specific axis of rotation and symmetry x-x.

If desired, the machine 17 comprises an auxiliary arm 19 mounted on the column or upright 3 or on an auxiliary column or upright (standing up or supported by the base 2 or by a respective base), means 20 for moving the auxiliary arm 19 as well as an assembly and/or disassembly tool 21 mounted on one end or portion of the auxiliary arm 19.

The movement means 20 could be similar to the actuation means 7, 8 or in any case such as to impart movements similar or parallel to those imparted by the actuation means 7, 8.

In this case, the control unit CPU or a respective auxiliary control unit is also designed to drive the movement means 20, advantageously the control unit controlling the movement means according to the parameters or data or information detected by the sensor 11, 12. Alternatively, the handling means 20 could be controlled by an operator, in which case the machine would be semiautomatic.

Clearly, the assembly and/or disassembly tool 21 can be articulated or pivoted or connected directly or with the interposition of another component to the respective arm 19.

Moreover, pedals or buttons 22 can be provided for controlling the actuators, actuation means or motors of the components of the group 1 or of the machine 17, or alternatively or in addition to this, remote controls of these elements.

Naturally, remote control of the actuation means, actuators or other means of the machine could also be provided, for example by means of a remote control, computer, tablet, mobile phone, etc.

The support and constraint means 18 are supported by the base 2 or by a respective base and are intended to support and constrain a wheel rim W or a tired wheel with axis of rotation and symmetry x-x, preferably, in use, vertical or inclined, for example by about 10°-40° with respect to the vertical, but also horizontal if desired.

The support and constraint means 18 can comprise a wheel-holder table 18a, if desired delimiting an axial hole, for example supported by a respective tubular component 18b, if desired in a vertical position, emerging from the base 2. In this case, the support and constraint means 18 can also comprise a centering cone element 18c with a shaft which can be inserted into the axial opening of a wheel rim mounted on the table 18a and which can be engaged in the axial hole of the latter so as to clamp the wheel rim and thus the wheel between the cone element and the table. If desired, a sliding pin can alternatively be provided within the tubular component 18b, on which pin the centering cone 18c can be mounted.

According to a variant, the support and constraint means 18 can include a clamping jaw unit.

If desired, the machine 17 comprises drive means (mounted in the base 2), for example a hydraulic, pneumatic or electric motor, if desired asynchronous, such as a three-phase asynchronous electric motor or a motor of another type, intended or arranged to drag the support and constraint means 18 in rotation, so that the latter are rotatable in such a way as to be able to drag into rotation a wheel rim W or a tired wheel mounted on them around an axis of rotation x-x, which, in use, corresponds to the axis of rotation and symmetry x-x of the wheel rim W or the tired wheel. The motor means can be housed within the base 2 or a base.

Clearly, the machine 1 can be also provided with a geared motor or means for transmitting motion from the motor means to the support and constraint means 18 or to the table 18a.

Alternatively, according to a less preferred variant, the support means 18 could be fixed, in which case one or more groups 1 or better still, the base of the same could be rotatable or mounted on wheels, so that it would be possible to drag the group around the wheel rim or wheel mounted on the support and constraint means.

Moreover, the support and constraint means 18 could be movable, for example liftable-lowerable and/or horizontally translatable. This could be useful for vertically and/or horizontally moving the support and constraint means towards the tool or tools of a group or of a machine according to the present invention.

If desired, the axis of rotation and symmetry x-x is substantially transversal or orthogonal to the main extension axis of the arms 5, 6, 19.

Preferably, during the bead breaking operations, when the roller 9, 10 is in contact with a portion of a bead, it will be rotated around the respective axis relative to the arm 5, 6 or, if provided, to the respective appendage owing to contact friction with the tire bead.

This bead breaking tool 9, 10 preferably performs the function of bead breaking, i.e. detaching a circumferential bead or a portion thereof from a respective edge of the wheel rim W or from a portion of the edge, before disassembling the bead, i.e. before the bead is brought, for example by the assembling and/or disassembling tool 21, outside the rim channel W beyond the respective edge W1, i.e. in the zone outside that delimited between two circumferential edges W1, W2 of the wheel rim W.

With the aim of better explaining the difference between bead breaker and assembling-disassembling tools, if a tired wheel is to be dismounted, the tire must first be bead-broken, i.e. the beads of the tire must be detached or moved away from the respective edges of the rim. This is usually achieved using so-called bead breaking roller tools, which are forcibly inserted between a portion of a tire bead and a respective portion of a respective edge of the wheel rim, detaching these portions and then the tired wheel is set in rotation so as to complete the bead breaking of the entire circumferential beads of the tire.

After completing the bead breaking operations, the broken beads must be dismounted, i.e. a first bead must be brought beyond the respective first rim edge, i.e. outside the area between the two rim edges and thus the other circumferential bead must also be brought beyond the first edge of the wheel rim, so as to complete the disassembly.

To carry out these disassembly operations a tool is used, which is usually configured as a nail or the like, with a single head or even a double rotating head (for example one for assembling and one for disassembling) and is intended to grip a portion of a bead of the tire and to drag it beyond the first edge of the rim.

Clearly, the machine 1 can also comprise a display connected, in particular electrically or electronically connected to the control unit CPU, which display is intended to provide the operators with a visual interface of the unit, through which the operators can view and if necessary, set this unit.

As means of entering data or settings in the unit or in the database, a keyboard and, if desired, also a mouse connected to the control unit can be provided to assist the operators during the setting or inspection of the same. If desired, these insertion means could also comprise a tablet or a smartphone or a touch screen display or similar means or means for acquiring voice messages.

Any display and/or keyboard can, for example, be mounted or supported by the column or a column 3.

With a machine according to the present invention it is possible to carry out an assembly and/or disassembly method.

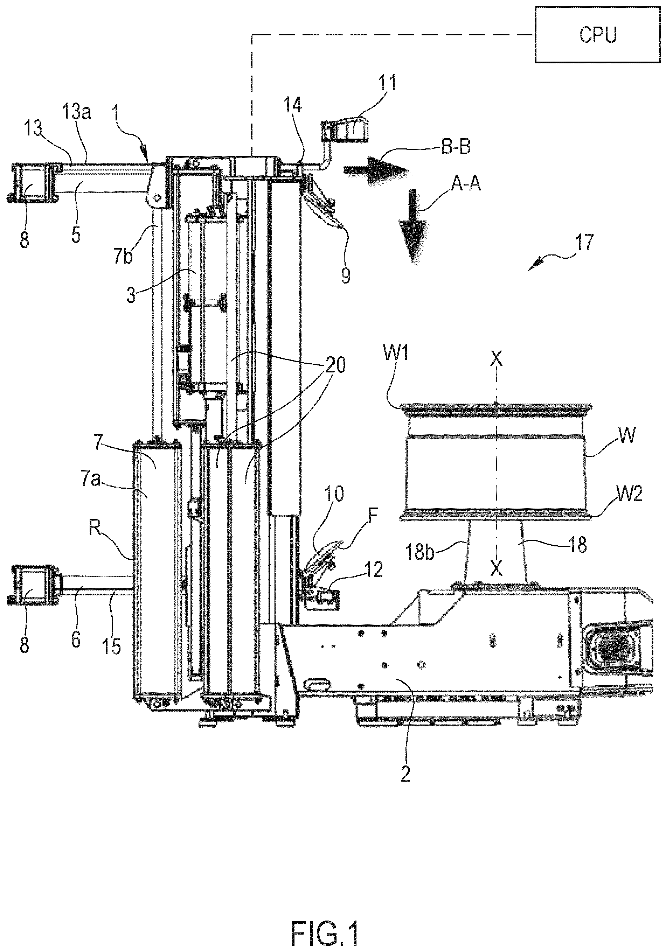

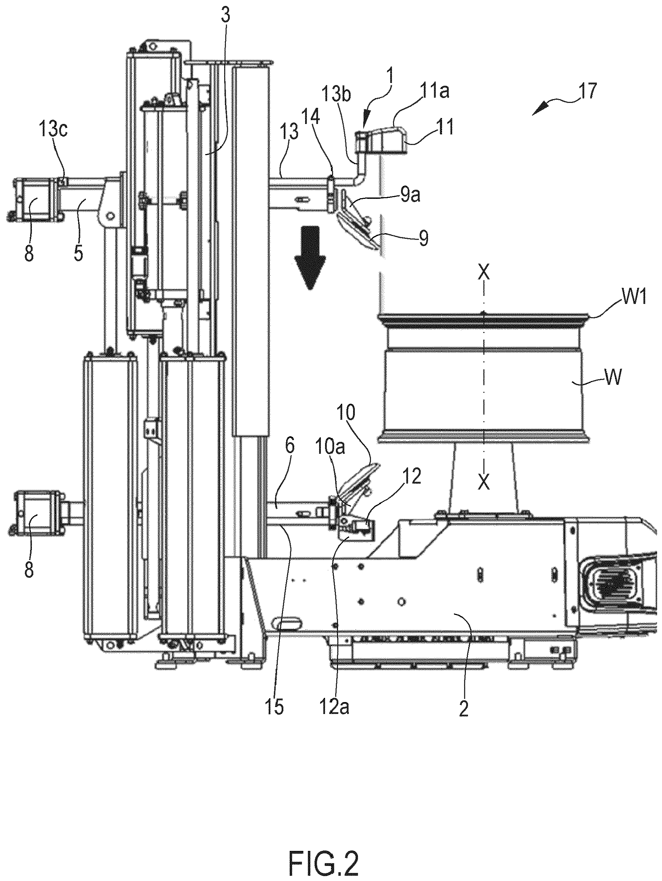

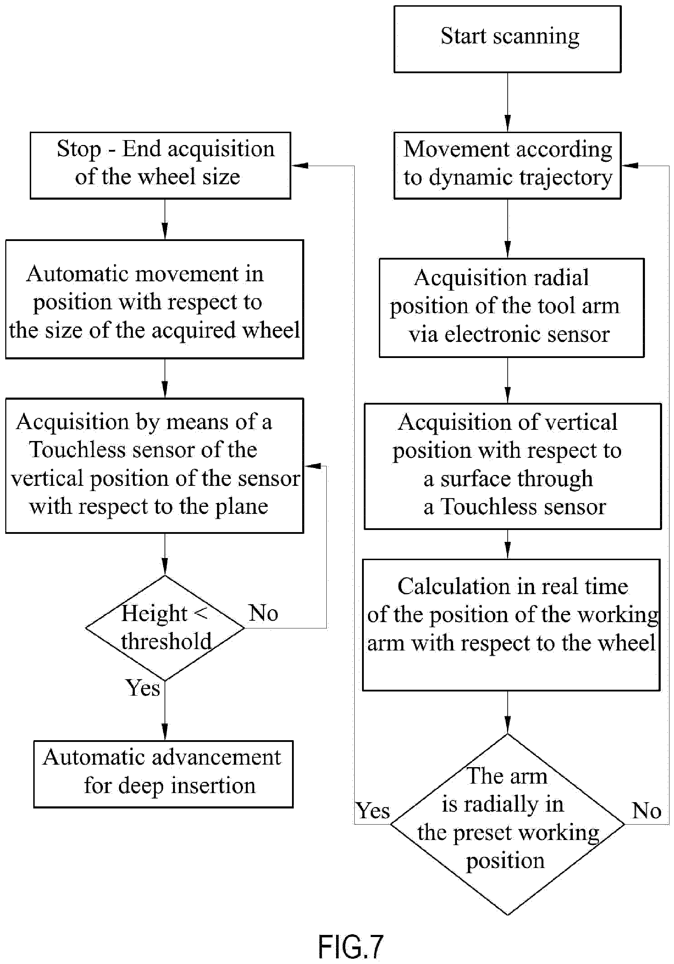

In this regard, referring to the disassembly operations, after having arranged, manually or automatically and constrained (by means of a centering cone 18c or other suitable method) a tired wheel to be disassembled on the wheel holder table 18a, a first arm is activated 5, which advances or moves (see figure 1 or step "movement according to dynamic trajectory" in figure 7) so as to bring the respective sensor 11 with its detection face, if desired facing downwards, such as to detect a geometric characteristic, such as the diameter of the rim W and the distance between it and a respective reference of a wheel rim, such as a respective circumferential edge, if desired, upper W1 of the wheel rim (see figure 2 and steps "Acquisition radial position of the tool arm via electronic sensor" and "Acquisition of vertical position with respect to a surface through a Touchless sensor" in figure 7).

As regards in detail the detection of the diameter, by making the arm 5, 6 advance in a direction orthogonal to the axis of rotation x-x of the wheel rim or wheel or by commanding its rotation so as to approach this axis x-x, when the sensor 11, 12 detects for the first time the edge W1 of the wheel rim W, the measured value makes it possible to obtain, directly or by processing by the control unit or a component integrated on the sensor, the diameter of the rim W.

Of course, as indicated above, these readings could be made by means of a single sensor or by means of two sensors 11. Moreover, the readings of the geometric characteristic and of the aforementioned distance could take place simultaneously or even in separate steps, one after the other.

As indicated above, the geometric characteristic or diameter of the wheel rim could alternatively be set by the operator or otherwise sensed or set, whereby in that case the sensor(s) 11, 12 would only detect the distance of the arm 5, 6 from the wheel rim.

At this point, the unit CPU controls, on the basis of the data obtained from the sensor 11 (if desired also of the diameter established or set or detected in any other way) the upper, if desired, arm 5 so as to bring, for example following movements along the direction B-B and parallel A-A to the axis of rotation x-x of the wheel rim W, the respective tool 9 first in the vicinity of the circumferential zone of the tired wheel of contact between the tire and the wheel rim and then to engage the wheel or better a bead of the tire suitably as a function of the measured diameter and height.

Preferably, the sensor 11 continues to measure the height or rather the distance thereof from the wheel rim or from the reference (if desired, a circumferential edge W1) of the wheel rim W continuously or in real-time and such detected data or information or parameters are transmitted to the central unit and processed by the latter, at least with reference to the above distance, continuously or in real time, so as to suitably drive the respective tool 9 during the entire respective work step, for example the bead breaking step. As far as the geometric characteristic or diameter of the wheel rim W is concerned, of course it is sufficient to measure the same at the beginning of the method.

The expressions "continuously" or "in real-time" mean that the detection, transmission and processing takes place several times at close time distances, for example in the order of thousandths or hundredths or tenths of a second.

This step can be carried out initially by moving the arm 5 parallel to the axis x-x, for example lowering it, if desired by means of the first actuator 7, so as to lower a portion of a bead of the tire and, after a predetermined movement or lowering, making it then to advance in direction of the axis x-x, if desired by means of the second actuator 8, so as to start the operation of breaking the upper circumferential bead of the tire from the wheel rim W.

The lowering or movement parallel to the axis x-x can be performed automatically by the machine or also "manually", i.e. the operator presses a button or uses the pedal to determine this advancement, but the machine or group can set limits to this action according to the parameters detected. This can clearly be done with each displacement imparted to the arms 5, 6, 19 of the machine.

With regard to this aspect, according to the non-limiting embodiment illustrated in the figures, since the sensor 11 or better the CPU recognizes the position according to the direction parallel to the axis x-x of the wheel to be treated, it is able to control at the appropriate time the penetration or advancement in the radial direction or towards the axis x-x of the tool or roller 9 by a fixed amount to suitably approach the axis of the wheel and carry out or complete the bead breaking of a portion of a circumferential bead.

With regard to this aspect, considering that the CPU continuously knows the distance of the sensor 11 from the reference or edge W1 or data or information correlated or correlated by the electronic control unit to this distance, and that it knows, as initially set and kept fixed during the treatment, even the distance of the sensor 11 from the front of the tool or roller 9, and also considering that the profile of the wheel rims is substantially standard or in any case easily recognizable or settable on the control unit CPU, once the tool or roller 5 has moved parallel to the axis x-x by a certain amount such as to bring the front of the tool or roller 9 to a certain position, for example from 1 to 5 cm, below (with reference to the embodiment shown in the figures) the edge W1 of the wheel rim, the CPU controls the advancement of the tool or roller 5 towards the axis x-x.

The extent of this insertion or advancement can also be fixed, if desired between 10 and 20 mm, and established so as to fit most (if not all) wheel rims and avoid damage, for example to the valve or other component.

At this point, the support and constraint means 18 are set in rotation and, in turn, the wheel rim W and the wheel completing the bead breaking of the first circumferential bead. This step could be carried out by controlling the rotation of the group around the wheel.

Subsequently, having released a first circumferential bead, the other arm 6 is moved so as to move the other tool 10 and release the other circumferential bead, providing before or during this step to make the arm 5, and then the respective tool 9, retract or move backwards.

During this step, according to the embodiment illustrated in the figures, the lower arm 6 is controlled to rise and thus to advance towards the axis x-x in a manner completely similar to the arm 5.

If desired, while the tool 10 carries out the bead breaking guided by the lower sensor, the unit CPU commands the removal from the axis x-x of the upper arm 5 and thus of the tool 9.

Once the bead breaking of the two sidewalls or beads of the tire has been completed, the demounting tool 21 is controlled, preferably automatically, to carry out the appropriate disassembling steps, assisted if desired by the rollers 9, 10 and/or by another tool and/or by the operator. With regard to this aspect, the tool 21 could have already been brought into the working position, for example immediately above the upper circumferential bead of the tire, following the detections of the sensor(s) 11, 12 (if desired also of the diameter inserted or set or otherwise detected).

As far as the assembly is concerned, the tool 21 could be able to carry out this operation (if desired assisted by the rollers 9, 10 and/or by another tool and/or by the operator), for example after rotation around a respective axis, so as to point the respective mounting head towards the treatment zone.

Basically, according to the present invention a machine is proposed with one or more sensors 11, 12 mounted on the arms of the machine, which sensors 11, 12 allow to detect and monitor continuously their distance from the wheel rim or from the point of application of the tool (roller) on the wheel or bead. If desired, one of the sensors also allows detecting a geometric characteristic, such as the diameter of the wheel rim of the wheel to be treated from time to time, but alternatively the geometric characteristic or diameter of the wheel rim could be set by the operator or detected or set in another way.

By checking this distance, the commands necessary for the required operation can be activated without knowing the wheel measurements or its position on the machine beforehand.

This system fosters execution speed and simplicity, furthermore it is no longer necessary to wait for the detectors to move away from the work zone as they are placed on the arms operating in areas outside the work area, so the sensors do not hinder the tools 9, 10.

Moreover, since the sensors are moved together with the respective tool 9, 10, the sensor in fact "sees" where the wheel is located in space with respect to the group and allows self-regulation to be obtained during the operating step.

Modifications and variations of the invention are possible within the scope defined by the claims.

## Claims

1. Group for the treatment, such as bead breaking and/or assembling and/or disassembling of tired wheels, comprising a base (2), at least one column or upright (3) rising from the base (2), at least one working arm (5, 6) supported or extending from the column or upright (3), actuation means (7, 8) arranged to determine the displacement of said at least one working arm (5, 6) along said column or upright (3) and/or with respect to said column or upright (3), at least one treatment tool (9, 10) of tired wheels mounted on one end or a portion of said at least one working arm (5, 6), at least one electronic control unit (CPU) arranged to drive said actuation means (7, 8) of said at least one working arm (5) and thus of said at least one treatment tool (9, 10) for carrying out the treatment of a tired wheel,
**characterized in that** it comprises at least one sensor (11, 12) arranged to detect the distance between said at least one sensor (11, 12) and a respective reference or circumferential edge (W1) of a wheel rim (W) or data or information related or correlatable by the electronic control unit (CPU) to this distance, as well as
communicate the thus detected parameters or data or information to said at least one electronic control unit (CPU), so that said electronic control unit (CPU) drives or is arranged to drive said actuation means (7, 8) as a function of the parameters or data or information detected by said at least one sensor (11, 12),
said at least one sensor (11, 12) being mounted on said at least one working arm (5, 6), so that both said at least one treatment tool (9, 10) and said at least one sensor (11, 12) are supported by or mounted on the same working arm (5, 6) and moved in unison together with the latter on control of the control unit (CPU).

2. Group according to claim 1, wherein said at least one sensor (11) is arranged to detect at least one geometric characteristic of a wheel rim or data or information related or correlatable by the electronic control unit (CPU) to at least one characteristic geometry, such as the diameter of a wheel rim, as well as to communicate said at least one geometric characteristic, thus detected, to said at least one electronic control unit (CPU), so that said electronic control unit (CPU) drives or is arranged to drive said actuation means (7, 8) also as a function of said at least one geometric characteristic detected by said at least one sensor (11, 12).

3. Group according to claim 1 or 2, comprising a working front (F) facing the treatment zone (TZ) of the unit and a rear (R) facing away from the treatment zone (TZ) and wherein said at least one sensor (11) protrudes with respect to said at least one treatment tool (9) in the direction of the front (F) or in any case is in a position from the rear (R) more distal with respect to the at least one treatment tool (9) or the detection zone or band of said at least one sensor (12) extends beyond the respective tool (10), i.e. it is more distal from the rear (R) than the relative tool (10).

4. Group according to claim 1 or 2 or 3, wherein said at least one sensor (11, 12) is mounted so as to have its detection zone facing upwards or downwards.

5. Group according to claim 3 and 4, wherein said at least one sensor (11, 12) is of the contactless type and has a signal emitting part and a signal receiving part.

6. Group according to claim 5, wherein said at least one sensor (11, 12) is an ultrasonic or laser sensor, in particular a laser triangulator and/or a sonar.

7. Group according to any one of the preceding claims, wherein said at least one arm (5, 6) is mounted vertically movable on said at least one column or upright (3), while said actuation means (7), suitably driven by the control unit (CPU), are arranged to control the lifting or lowering of said at least one arm (5, 6).

8. Group according to any one of the preceding claims, wherein said at least one arm (5, 6) is telescopic or entirely or partially horizontally displaceable in the direction from the rear (R) to the front (F) so as to cause an advance or retraction in such direction of said at least one treatment tool (9, 10) and of said at least one sensor (11, 12).

9. Group according to any one of the preceding claims, wherein said at least one treatment tool (9, 10) is a bead breaking roller.

10. Group according to any one of the preceding claims, comprising at least two working arms (5, 6) as well as at least two treatment tools (9, 10) and two sensors (11, 12), each of said at least two arms supporting at least one treatment tool (9, 10) and at least one sensor (11, 12).

11. Group according to claim 10, wherein said sensors (11, 12) are one (11) in a position upper than the respective tool (9) and the other (12) in a position lower than the respective tool (10).

12. Group according to any one of the preceding claims, wherein said at least one sensor (11, 12) is arranged to continuously measure the distance thereof from a wheel rim or from a respective reference or circumferential edge (W1) or data or information related or correlatable by the electronic control unit to this distance, and is arranged to continuously transmit this detected distance or data or information, whereas said electronic central unit is arranged to process the distance or data or information received continuously, so as to suitably drive said at least one tool (9, 10) during the whole respective work phase.

13. Machine comprising at least one group according to any one of claims 1 to 12 as well as support and constraint means (18) for a wheel rim of or for a tired wheel arranged to support a wheel rim (W) or a tired wheel with a specific rotation and symmetry axis (x-x).

14. Machine according to claim 13, comprising an auxiliary arm (19) mounted on said at least one column or upright (3) or on an auxiliary column or upright, movement means (20) of said auxiliary arm (19) as well as a tool for assembling and/or disassembling (21) mounted on an end or a portion of said at least one auxiliary arm (19), said at least one control unit (CPU) being arranged to drive also said movement means (20).

15. Machine according to claim 14, wherein said control unit (CPU) controls said movement means (20) as a function of the data detected by said at least one sensor (11, 12).

16. Method for disassembling a tired wheel with a machine according to claim 13 or 14 or 15, comprising the following steps:
- arrange a tired wheel to be disassembled on said support and constraint means (18), actuate a working arm (5, 6) so as to make it advance or move so as to bring the respective sensor (11, 12) with detection face such as to detect the distance between this sensor (11, 12) and a respective reference or circumferential edge (W1) of the wheel rim (W) or data or information related or correlatable by the electronic control unit (CPU) to this distance,
- said at least one sensor (11, 12) detecting even at least one geometric characteristic of a wheel rim or data or information related or correlatable by the electronic control unit (CPU) to at least one geometric characteristic of a wheel rim or said geometric characteristic being set by an operator or detected or set in another manner,
- control, by means of the control unit (CPU), as a function of the data obtained from said at least one sensor (11, 12), the arm (5, 6) so as to bring the respective tool (9, 10) to engage the wheel or a circumferential edge thereof,
said sensor (11, 12) continuously measuring its distance from the wheel rim or from the respective reference or circumferential edge (W1) or data or information related or correlatable by the electronic control unit to such distance, and such detected distance or data o information is transmitted to the central unit and processed by the latter continuously, so as to suitably drive said at least one tool (9, 10) during the entire respective work phase,
- rotate the support and constraint means (18) and then the wheel rim (W) and the wheel, completing the bead breaking of the first circumferential bead or control the rotation of the group around the wheel,
- drive said tool for assembling and/or disassembling (21) so as to disassemble the tire from the wheel rim.

17. Method according to claim 16, wherein since the control unit (CPU) recognizes the position of the sensor (11) according to the direction parallel to the axis (x-x) of the wheel to be treated, the control unit is capable of controlling, at the right time, the insertion or advancement in the radial direction or towards the axis (x-x) of the tool (9, 10) for a fixed amount to appropriately approach the axis of rotation of the wheel and lead or complete the bead breaking of a portion of a circumferential bead.
